# EUROPEAN PATENT APPLICATION

(11) **EP 2 093 902 A1**
(43) Date of publication of application: **26.08.2009**
(21) Application number: 07850543.5
(22) Date of filing: 13.12.2007
(51) Int. Cl.: H04B 7/26, H04L 12/56

(54) **COMMUNICATION METHOD AND RADIO COMMUNICATION SYSTEM**

(30) Priority: 14.12.2006 JP 2006337219
(71) Applicant: MITSUBISHI ELECTRIC CORPORATION, Chiyoda-ku Tokyo 100-8310 (JP)
(72) Inventor: KAWABATA, Takashi, Tokyo 100-8310 (JP)
(74) Representative: Pfenning, Meinig & Partner GbR
(86) International application number: PCT/JP2007/074023
(87) International publication number: WO 2008/072691

(57) **Abstract**

A communication method in a wireless communication system that has an MBS function and configures an MBS zone that is a range using same connection identification information includes a step including an MBS control apparatus classifying MBS contents into a plurality of types of MBS; a step including the MBS control apparatus managing information in which an MBS identifier corresponding to the MBS zone, a base station configuring the MBS zone, and a gateway apparatus related to the MBS zone are associated with each other for each of the types of MBS; a step including the MBS control apparatus sending MBS zone configuration information including managed information to the gateway apparatus; a step including the gateway apparatus holding the MBS zone configuration information and transferring the MBS zone configuration information to a base station; a step including the base station obtaining connection identification information corresponding to the MBS zone identifier for each of the types of MBS and sending the connection identification information to a terminal; and a step including the terminal performing a communication with the base station based on a type of MBS of MBS contents and the connection identification information.

## Description

### TECHNICAL FIELD

The present invention relates to a communication method and a wireless communication system for realizing a multicast and broadcast service (MBS).

### BACKGROUND ART

In a conventional multicast and broadcast service (MBS), a connection is defined by a multicast connection identifier (CID), and a packet transmitted using the same CID can be received by a plurality of terminals at the same time. A single base station access in which one wireless base station transmits contents and a multi base station access in which a group of multiple base stations transmits the same contents are presently being studied (see, for example, Non-Patent Document 1).

An effective range of one multicast connection identifier is called an MBS zone, which is identified by an MBS zone identifier. When a mobile station in an idle mode moves across base stations with the same MBS zone identifier, the mobile station can move without registering its position in a particular wireless base station (see, for example, Section 6.3.23 in Non-Patent Document 2).

In addition, the wireless base station can broadcast an information element including the MBS zone identifier (see, for example, Section 8.4.5.3.12 or Section 6.3.2.3.43.6.9 in Non-Patent Document 2). In order to support a situation where a wireless base station is located at a boundary of a plurality of MBS zones, the wireless base station can also broadcast multiple MBS zone identifiers.

Moreover, as a similar technique, in the 3rd generation partnership project (3GPP), a multimedia broadcast/multicast service (MBMS) technique, which provides a service by a multicast connection in a packet switching domain, is standardized (see, for example, Non-Patent Document 3).

Non-Patent Document 1: "Revised Wireless Broadband Textbook High-Speed IP Wireless Edition", written and edited by Hattori and Fujioka, Impress R&D, pp. 190-191, June 21, 2006
Non-Patent Document 2: IEEE Std 802.16e-2005, "Amendment 2: Physical and Medium Access Control Layers for Combined Fixed and Mobile Operation in Licensed Bands and Corrigendum 1", Feb. 28, 2006
Non-Patent Document 3: "Revised Wireless Broadband Textbook 3.5G/Next Generation Mobile Edition", written and edited by Hattori and Fujioka, Impress R&D, pp. 271-280, Apr. 11, 2006

### DISCLOSURE OF INVENTION

### PROBLEM TO BE SOLVED BY THE INVENTION

Applications provided by the MBS have various characteristics, and the forms of required services are different depending on the characteristics. For example, in a broadcast type MBS such as a terrestrial digital broadcast for mobile objects, a usability is required in which a desired service can be received by only tuning a channel without requiring again a sending of a program even when a mobile station moves to any place. On the other hand, when providing a communication type MBS such as a multiperson video conference, a members-only broadcast service, and a video-on-demand, it is desirable to provide the service by limiting a positional range as much as possible from a viewpoint of an effective usage of frequency recourses. Therefore, from the viewpoint of an allocation of the MBS, in the former broadcast type MBS, it is desirable to set an MBS zone with a broad range, and in the latter communication type MBS, it is desirable to set an MBS zone with a limited range.

Furthermore, sometimes, a wide range of these applications are serviced in parallel. In order to realize paralleled services, it is desirable that a plurality of different MBS zone allocations should be utilized at the same time.

However, in the conventional MBS technique described above, a plurality of MBS zone allocations cannot be taken at the same time. For this reason, there is a problem that a service that utilizes multiple different MBS zone allocations cannot be provided. In addition, there is another problem that, when the mobile station moves across the MBS zones, a continuous use of the MBS is difficult because a function for setting a network connection is not considered.

The present invention has been achieved in view of the above discussion, and it is an object of the present invention to provide a communication method and a wireless communication system capable of providing MBSs that use a plurality of MBS zone allocations including an MBS zone allocation with a broad range and an MBS zone allocation with a limited range in parallel, and continuously using the MBS service even when a mobile station moves across the MBS zones.

### MEANS FOR SOLVING PROBLEM

To solve the above problems and to achieve the object, a communication method according to the present invention is for a wireless communication system that has an MBS (multicast and broadcast service) function and configures an MBS zone that is a range using same connection identification information. The communication method includes a contents classifying step including an MBS control apparatus classifying MBS contents into a plurality of types of MBS based on characteristics of the MBS contents; an MBS-zone-allocation managing step including the MBS control apparatus managing information in which an MBS identifier corresponding to the MBS zone, a base station configuring the MBS zone, and a gateway apparatus related to the MBS zone are associated with each other for each of the types of MBS; an MBS-zone-configuration-information sending step including the MBS control apparatus sending MBS zone configuration information including managed information to the gateway apparatus; an MBS-zone-configuration-information transfer step including the gateway apparatus holding the MBS zone configuration information and transferring the MBS zone configuration information to a base station under the gateway apparatus; a connection-information sending step including the base station holding the MBS zone identifier for each of the types of MBS based on the MBS zone configuration information, obtaining connection identification information corresponding to the MBS zone identifier for each of the types of MBS, and sending the connection identification information to a terminal connected to the base station; and a wireless communicating step including a terminal connected to the base station performing a communication with the base station based on a type of MBS of MBS contents to be serviced and received connection identification information.

### EFFECT OF THE INVENTION

According to the present invention, MBS contents are classified into types of MBS in accordance with characteristics of the MBS, a plurality of MBS zone allocations corresponding to the types of MBS is provided, and furthermore, when a mobile station moves, registration information of the mobile station is transferred between gateways, thereby enabling to provide MBSs using the MBS zone allocations in parallel and continuously provide the service when the mobile station moves.

### BRIEF DESCRIPTION OF DRAWINGS

[Fig. 1] Fig. 1 is a schematic diagram illustrating an example of the configuration of a communication system according to an embodiment of the present invention.
[Fig. 2] Fig. 2 is a diagram showing an example of an MBS contents management table.
[Fig. 3-1] Fig. 3-1 is a diagram showing an example of a communication type MBS contents management table.
[Fig. 3-2] Fig. 3-2 is a diagram showing an example of a broadcast type MBS contents management table.
[Fig. 4] Fig. 4 is a flowchart of the initial setting of an MBS zone.
[Fig. 5] Fig. 5 is a schematic diagram illustrating an example of a system configuration of the portion related to the operation when a mobile station participates in a multicast group G2.
[Fig. 6] Fig. 6 is a flowchart when the mobile station participates in the multicast group G2.
[Fig. 7] Fig. 7 is a schematic diagram illustrating an example of a system configuration of the portion related to the operation when the mobile station participates in a multicast group G3.
[Fig. 8] Fig. 8 is a flowchart when the mobile station participates in the multicast group G3.
[Fig. 9] Fig. 9 is a schematic diagram illustrating an example of a system configuration of the portion related to the operation when the mobile station moves across MBS zones.
[Fig. 10] Fig. 10 is a flowchart of zone-moving processing.
[Fig. 11] Fig. 11 is a flowchart of a proxy report processing for a query message.

### EXPLANATIONS OF LETTERS OR NUMERALS

- 1: contents server
- 2: MBS control apparatus
- 3-1, 3-2: multicast router
- 4-1, 4-2: GW
- 5-1 to 5-N: BS
- 6: mobile station
- 7: IP multicast network
- 11, 12, 13: communication type MBS zone
- 21, 22: broadcast type MBS zone
- 31, 32, 33, 34: broadcasting information
- 41, 42, 43: multicast participation request message
- 44: multicast participation response message
- 51: delivery tree change message
- 52, 53: route change message
- G2, G3: multicast group
- 61, 62: multicast participation message
- 63: zone-moving notification message
- 64: zone-moving response message

### BEST MODE(S) FOR CARRYING OUT THE INVENTION

Exemplary embodiments of a communication apparatus and a communication method, a gateway apparatus, an MBS control apparatus, and a wireless base station and a terminal according to the present invention will be explained below in detail with reference to the accompanying drawings. It is understood that the present invention is not limited to the embodiments.

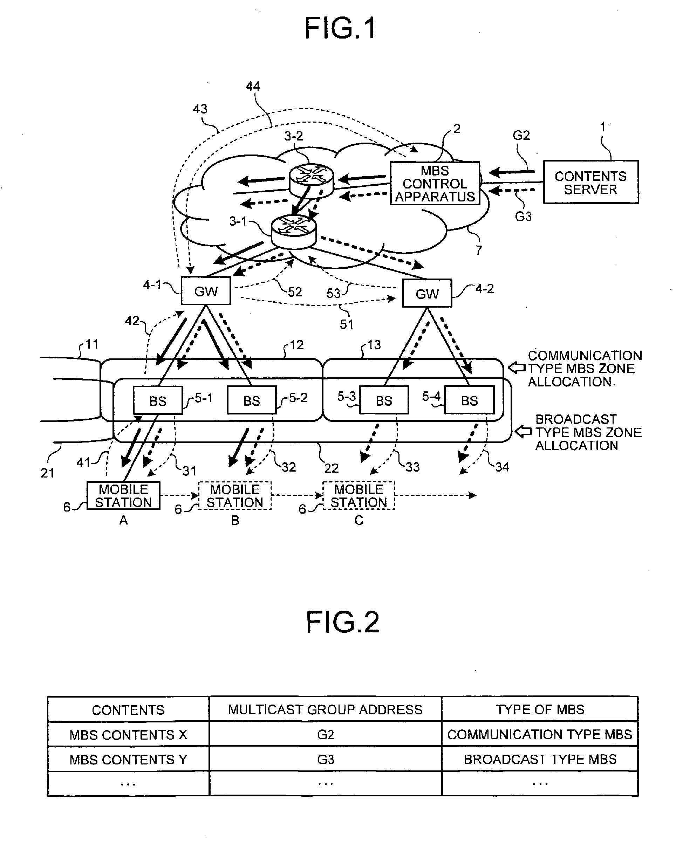

Fig. 1 is a schematic diagram illustrating an example of the configuration of a communication system according to an embodiment of the present invention including the gateway apparatus, the MBS control apparatus (control apparatus), and the mobile station (terminal) according to the present invention. In Fig. 1, the communication system of the present embodiment includes a contents server 1 that stores contents provided by a multicast and a broadcast, an MBS control apparatus 2 that functions as an entry for an MBS (Multicast and Broadcast Service) contents delivery service as well as controls the whole system, multicast routers 3-1 and 3-2, GW (gateways) 4-1 and 4-2 that connect a wireless access network to an IP (Internet Protocol) multicast network to realize wireless access service collaborating with the wireless base stations under control, BS (wireless base stations) 5-1 to 5-4 that wirelessly connect to mobile stations, and mobile stations 6 that are movable wireless terminals. The MBS control apparatus 2 is equipped with a service announcement function (a function to inform a user on the information about the services to provide) for a contents delivery service, a membership and key management function (a function to keep the information about the user, give a key for registering the user and protecting data, and perform other works), a session and sending function (a function to send an MBS session and perform a scheduling management and other works), and other functions. The MBS control apparatus 2 can be equipped with a management function for MBS zone locations and transfer routes, and can be configured with a plurality of apparatuses. In addition the contents server 1 can be configured with a plurality of servers.

An IP multicast network 7 is a network configured with the multicast routers 3-1 and 3-2 that transfer a packet based on an IP multicast technique. A, B, and C represent an example of three positions, respectively, when a mobile station 6 moves. The communication type MBS zones 11, 12, and 13 are MBS zones corresponding to the communication type MBS, and let Z11, Z12, and Z13 be assigned, respectively, as communication type MBS identifiers for identifying the communication type MBS zones. The broadcast type MBS zones 21 and 22 are MBS zones corresponding to the broadcast type MBS, and let Z21 and Z22 be assigned, respectively, as broadcast type MBS identifiers for identifying the broadcast type MBS zones.

Pieces of broadcasting information 31, 32, 33, and 34 are broadcasting information that BS 5-1, 5-2, 5-3, and 5-4 inform, respectively, to a wireless line.
Multicast participation request messages 41, 42, and 43 are messages for requesting to change a multicast group participation state, and a multicast participation response message 44 is a response message for requesting a multicast participation. In addition, a delivery tree change message 51 is a message for specifying the change of a delivery tree connection, route change messages 52 and 53 are messages for requesting to change a multicast route. Multicast groups G2 and G3 are multicast groups based on the IP multicast technique. In the figure, an arrow with a letter G2 and other thick solid line arrows show the flow of an IP packet on the multicast groups G2, and an arrow with a letter G3 and other thick broken line arrows show the flow of an IP packet on the multicast groups G3.

In the present embodiment, a network configuration based on the IP multicast technique is adopted. The IP multicast technique uses a special destination address called a multicast group address and sends the same data to all terminals that participate in the multicast group corresponding to the address. The multicast group is identified by the multicast group address that is set to the address of an IP header, and its IP packet is transferred to all terminals that participate in the multicast group corresponding to the multicast group address.

The multicast routers 3-1 and 3-2 manage the correspondence of host IP addresses participating in this multicast group as membership information, and transfer an IP packet for the multicast group address to all hosts that participate in the multicast group. In order to participate in the multicast group, a participation notification for the host is sent to the multicast routers adjacent to participating hosts, and the multicast routers update the membership information. When resigning from the multicast group, a deletion notification is performed to the adjacent multicast router. In what follows, a terminal participating in the multicast group is called as a participating station.

In addition, the MBS zone is a region where registration is not required even if the wireless base station to connect wirelessly is changed. For the mobile station, a wider MBS zone becomes more convenient to use. On the other hand, for example, when distributing data using the multicast group of the IP multicast technique, in order that the mobile station keeps receiving contents continuously without requiring reregistration within the MBS zone, all the wireless base stations configuring one MBS zone also need to receive the data for the multicast group. For this reason, all the wireless base stations configuring one MBS zone receive a service of delivery using all the multicast groups that the mobile stations in the MBS zone participate. Therefore, taking a too broad MBS zone is unfavorable for the efficiency of frequency use.

Moreover, because it is highly possible that many mobile stations participate in the services for general public like the broadcast type MBS, the MBS zone is desirable to be a broad range by putting highest priority on user friendliness. On the other hand, for the communication type MBS, because users are limited, the MBS zone is desirable to be a narrower range compared with the broadcast type MBS by taking the efficiency of frequency use into consideration.

As described above, by considering the fact that the optimum MBS zone differs according to the MBS contents, the present embodiment provides two types of MBS zones - the communication type MBS zone and the broadcast type MBS zone - are provided, and realizes two MBS zone locations at the same time. In addition, in the present embodiment, by using the same multicast connection identifier (CID: Connection Identifier) in one MBS zone, the reregistration is not necessary even if a mobile station connects to another wireless base station in the same MBS zone; however, not by using the CID but by using other connection information, the MBS zone can be configured as a zone in which the reregistration is not necessary.

Next, operation of the present embodiment is explained. First, the contents server 1 stores a communication type MBS contents X and a broadcast type MBS contents Y. The MBS control apparatus 2 sets these contents stored in the contents server 1 to G2 and G3 as multicast group addresses, respectively. In addition, the MBS control apparatus 2 makes correspondence with the types of MBS that are provided to separate the characteristics of the MBS for these contents stored in the contents server 1. In the present embodiment, the types of MBS that are provided to separate the characteristics of the MB are separated into the communication type MBS and the broadcast type MBS. The MBS control apparatus 2 holds the information corresponding to these contents as a MBS contents control table in the apparatus thereof.

Fig. 2 is an example of the MBS contents control table provided by the MBS control apparatus. As shown in Fig. 2, the MBS contents X having communication type characteristics corresponds to the communication type MBS by making the multicast group address as G2. In addition, the MBS contents Y having broadcast type characteristics corresponds to the broadcast type MBS by making the multicast group address as G3.

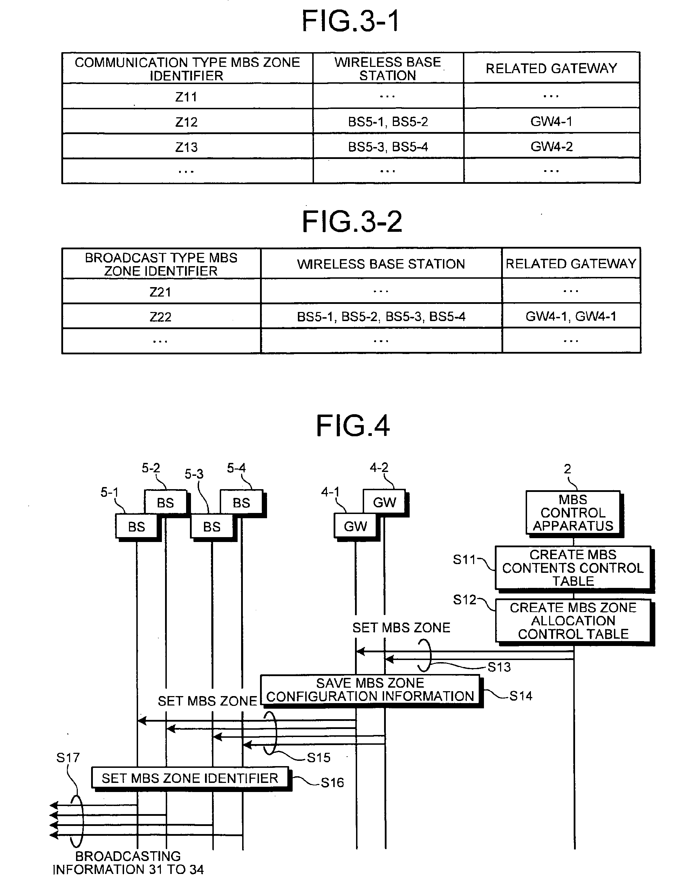

Furthermore, the MBS control apparatus 2 sets the MBS zone allocation for each type of MBS, and holds the information on the MBS zone allocations as the MBS contents control table in the MBS control apparatus 2 thereof. An example of the MBS contents control table is shown in Figs. 3-1 and 3-2. An example of an MBS zone allocation control table (communication type MBS zone allocation control table) for controlling the communication type MBS zone allocation is shown in Fig. 3-1, and an example of the MBS zone allocation control table (broadcast type MBS zone allocation control table) for controlling the broadcast type MBS zone allocation is shown in Fig. 3-2.

As shown in Fig. 3-1, the communication type MBS zone allocation control table includes communication type MBS zone identifiers and gateways that relate to the wireless base stations configuring each communication type MBS zone. For example, in Fig. 3-1, it is shown that a communication type MBS zone 12 identified by a communication type MBS zone identifier Z12 is configured with BS5-1 and BS5-2, and a communication type MBS zone 13 identified by a communication type MBS zone identifier Z13 is configured with BS5-3 and BS5-4. In addition, the related gateway represents a GW that has BSs configuring each MBS zone under control.

As shown in Fig. 3-2, the broadcast type MBS zone allocation control table includes broadcast type MBS zone identifiers and gateways that relate to the wireless base stations configuring each broadcast type MBS zone. For example, it is shown that a broadcast type MBS zone 22 identified by a broadcast type MBS zone identifier Z22 is configured with Buss-1, BS5-2, BS5-3, and BS5-4.

Fig. 4 depicts a flowchart of the initial setting of the MBS zone. As described above, the MBS control apparatus creates an MBS contents control table as shown in Fig. 2 (Step S11). Next, the MBS control apparatus 2 creates, as described above, an MBS zone control table for each type of MBS that are provided to separate the characteristics of the MB included in the MBS contents control table (Step S12). The MBS control apparatus 2 sends MBS zone setting messages to the related gateways GW4-1 and GW4-2 corresponding to each MBS zone identifier for each type of MBS following the created MBS zone control table (Step S13). The MBS zone setting message is a message for setting an MBS zone that includes MBS zone configuration information (information on the MBS zone identifier for each type of MBS, the BS group configuring each MBS zone, the related GW, and the like).

Next, when GW4-1 and GW4-2 receive the MBS zone setting message, they save the MBS zone configuration information (Step S14). Then, GW4-1 and GW4-2 send the MBS zone setting messages to BS5-1 to BS5-4 under their respective controls (Step S15). When receiving the zone setting message, each of the BS5-1 to BS5-4 sets the MBS zone identifier to itself for each type of MBS (Step S16). At this moment, suppose that the CID corresponding to each MBS identifier is predetermined, and BS5-1 to BS5-4 each hold the correspondence. Because each of BS5-1 to BS5-4 communicates with a wireless terminal including the mobile station 6 that wirelessly connects to their own station using the corresponding CID based on the MBS identifier, in this CID for each type of MBS, BS5-1 to BS5-4 must send the message to their own stations and the wireless terminals. For example, when the wireless terminal performs initial registration processing to BS5-1 to BS5-4, BS5-1 to BS5-4 send the message to the wireless terminals. In addition, each of the BS5-1 to BS5-4 sends the broadcasting information 31 to 34 including the MBS zone identifier for each type of MBS and the corresponding CID to a wireless channel to be connected (Step S17). For example, BS5-1 sends the broadcasting information including the communication type MBS zone identifier Z12 and the broadcast type MBS zone identifier Z22.

As described above, when the mobile station 6 so as to include the MBS zone identifier in the broadcasting information, it is possible to judge that the MBS zone is changed by receiving any one piece of the broadcasting information 31 to 34. In addition, the mobile station 6 can know the CID that is used for each type of MBS of the participating multicast group and perform a communication using the CID corresponding to each type of MBS.

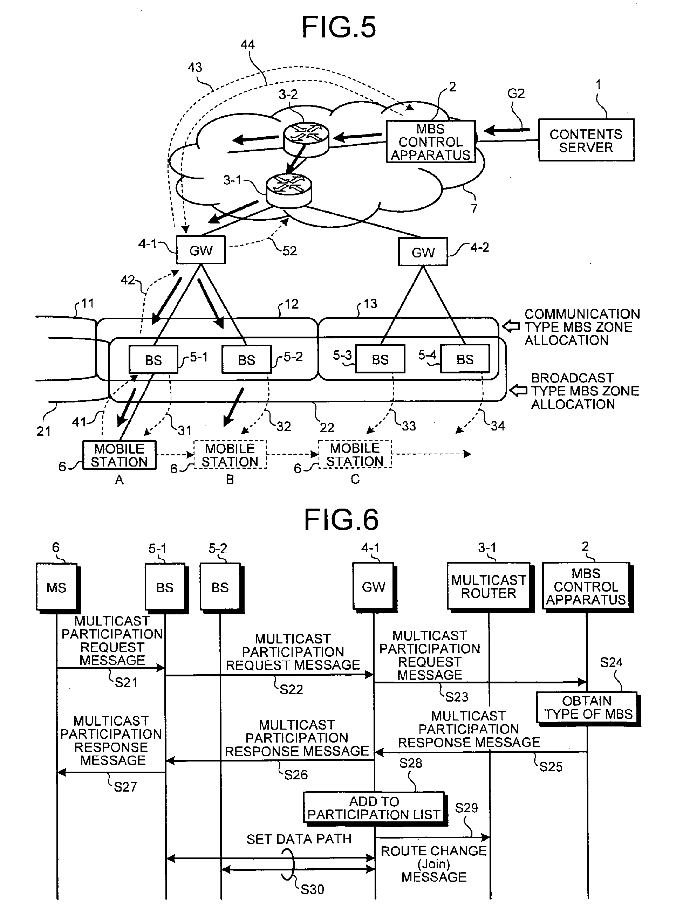

Subsequently, operation when the mobile station 6 participates in the multicast group is explained. In addition, suppose that the multicast group address is used as the group name of the corresponding multicast group. Fig. 5 is a system configuration diagram extracted from Fig. 1 for a part related to the operation when the mobile station 6 participates in the multicast group G2. Suppose, here, that the mobile station 6 can provide the MBS contents X (corresponding to the multicast group G2) and the MBS contents Y (corresponding to the multicast group G3) by means of a service announce function provided by the MBS control apparatus, and know that the multicast group addresses corresponding the respective MBS contents are G2 and G3, respectively. In addition, suppose that GW4-1 and GW4-2 create and hold a multicast group participation station list that is a list of participating stations that participate in the multicast group based on the MBS zone configuration information and multicast participation requests of mobile stations, and update the list based on the multicast participation requests from the mobile stations. On this occasion, GW4-1 and GW4-2 hold the multicast group participation station list for the contents that are delivered to the MBS zones to which BS5-1 to BS5-4 belong under the respective controls.

Fig. 6 illustrates a flowchart when the mobile station 6 participates in the multicast group G2. Suppose that the mobile station 6 locates at a position A, wirelessly connects to a wireless base station BS5-1, and newly participates in the multicast group G2 to obtain the MBS contents X. First, the mobile station 6 specifies the multicast group address (in this situation, G2) and sends the multicast participation request message to BS5-1 (Step S21). BS5-1 transfers this multicast participation request message to the MBS control apparatus through GW4-1 (Steps S22 and S23). Upon receiving this multicast participation request message, the MBS control apparatus 2 performs acknowledgement processing of the participating stations as well as obtains the type of MBS (in this situation, the communication type MBS) corresponding to the multicast group address G2 requested for the participation referring to the MBS contents control table shown in Fig. 2 (Step S24) .

Next, the MBS control apparatus 2 sends a multicast participation response message that is a response message to a multicast participation message including the information on which the type of MBS of the multicast group G2 is the communication type MBS (Step S25). GW4-1 transfers this multicast participation response message to BS5-1 (Step S26). Then, BS5-1 transfers this multicast participation response message to the mobile station 6 (Step S27). In this way, the mobile station 6 can know that the type of MBS of the multicast group G2 is the communication type MBS. In addition, the MBS control apparatus 2 can make the mobile station 6 know the type of MBS of the multicast group by announcing the type of MBS by using the service announcement function.

In addition, upon receiving the multicast participation response message sent in step 25, GW4-1 adds the mobile station 6 to a multicast group participation station list for the multicast group G2 (Step S28). If the mobile station 6 is the first participating station for the multicast group G2 (if GW4-1 is not participated in the multicast group G2), GW4-1 refers to the MBS zone configuration information described above, and sends a route change message to an adjacent upstream multicast router 3-1 so as to add the GW4-1 apparatus itself and the mobile station 6 to the multicast group G2 (Step S29). In addition, if the mobile station 6 is not the first participating station for the multicast group G2, GW4-1 sends a route change message to the multicast router 3-1 so as to add the mobile station 6 to the multicast group G2. For this route change message, a Join/Prune message complying with, for example, PIM (Protocol Independent Multicast) protocol, IGMP (Internet Group Management Protocol) in IPv4, or MLD (Multicast Listener Discovery) protocol in IPv6 can be used.

Moreover, GW4-1 sets a data path so that IP packets for the destination of the multicast group address G2 are transferred to BS5-1 and BS5-2 by recognizing that the multicast participation response message is a participation request for the communication type MBS contents based on the type of MBS contained in the message (Step S30). With the processing described above, the processing of participating in the multicast group G2 of the mobile station 6 is performed, thereby enabling to deliver the MBX contents X to the communication type MBS zone 12.

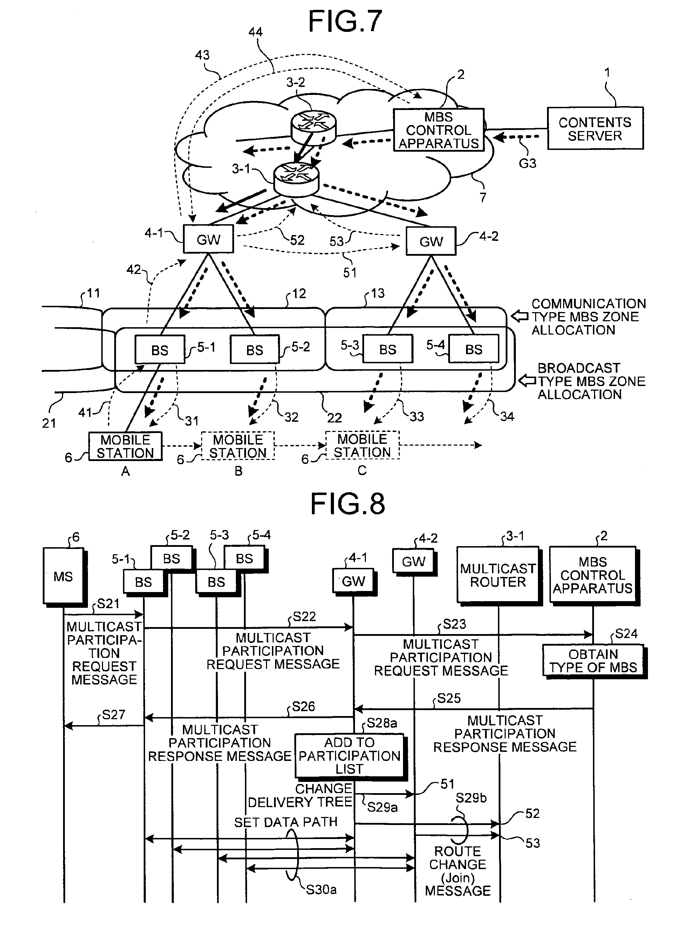

Fig. 7 is a system configuration diagram extracted from Fig. 1 for a part related to the operation when the mobile station 6 participates in the multicast group G3 for receiving the broadcast type MBS contents Y. Fig. 8 illustrates a flowchart when the mobile station 6 participates in the multicast group G3. When participating in the broadcast type multicast group G3, up to Step S27, operation is the same as that when participating in the multicast group G2 shown in Fig. 6. In Step S28a, the mobile station 6 is added to the multicast group participation station list for the multicast group G3. The multicast group G3 is the broadcast type MBS, and the related gateways include not only GW4-1 but also GW4-2. Therefore, GW4-1 sends the delivery tree change message to GW4-2, and GW4-2 is also requested to participate in the multicast group G3 (Step S29a). In Step S29a, GW4-1 and GW4-2 send a route change message to the multicast router 3-1 in the upstream so that IP packets for the destination of the multicast group G3 are delivered to the MBS control apparatus 2 thereof (Step S29b). In Step S30a, GW4-1 and GW4-2 set a data path so that the IP packets for the destination of the multicast group G3 are delivered to BS5-1 and BS5-2, and BS5-3 and BS5-4 under the respective controls configuring the broadcast type MBS zone 22.

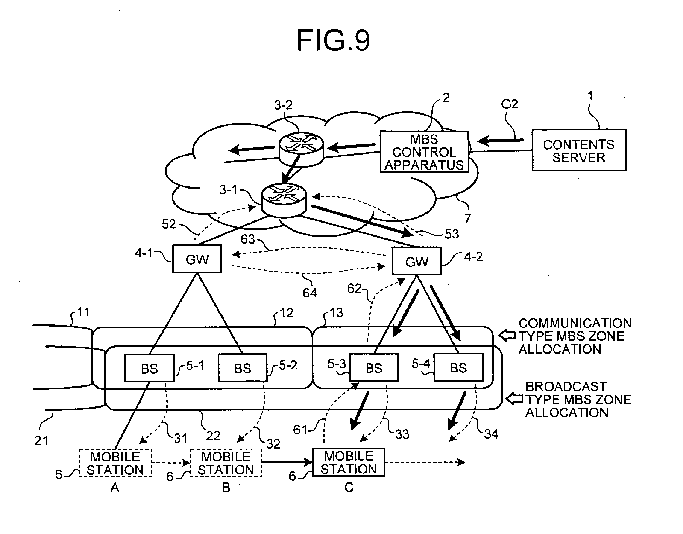

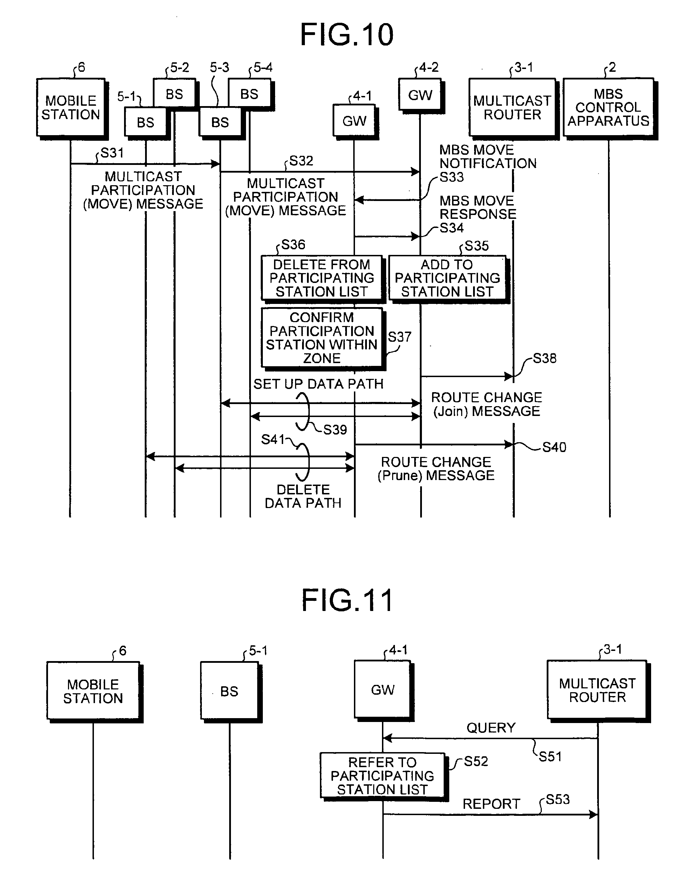

Next, operations when the mobile station 6 moves from position A to positions B and C are explained with references to Fig. 9 and Fig. 10, respectively. Fig. 9 is a system configuration diagram extracted from Fig. 1 for a part related to the move of the mobile station 6.
Multicast participation messages 61 and 62 show multicast participation messages when the mobile station moves to the position C, a zone-moving notification message 63 shows a message to inform that the MBS zone is changed, and a zone-moving response message 64 shows a response message for the zone-moving notification message 63.

First, when the mobile station 6 moves to the position B, the mobile station 6 receives the broadcasting information 32 from BS5-2 to obtain the MBS zone identifier corresponding to each type of MBS of the participating multicast group. When the mobile station 6 obtains the MBS zone identifier, the mobile station 6 stores the MBS identifier for each type of MBS, and updates the MBS identifier every time when obtaining the MBS zone identifier. For the situation of the position B, the broadcasting information 32 includes Z12 as the communication type MBS zone identifier and Z22 as the broadcast type MBS zone identifier; for either type of MBS, the type of MBS is the same as that of the stored MBS identifier, so it is possible to judge that the MBS zone is not changed compared with the situation of the position A.

Next, when the mobile station 6 moves from the position B to the position C, the mobile station 6 receives the broadcasting information 33 from BS5-3. The broadcasting information 33 includes Z13 as the communication type MBS zone identifier and Z22 as the broadcast type MBS zone identifier. Therefore, if the mobile station 6 participates in the broadcast type multicast group G3, because the broadcast type MBS zone identifier is the same as that at the position B, it is judged that the MBS zone is not changed, and any particular processing is not performed. On the other hand, if the mobile station 6 participates in the communication type multicast group G2, because the communication type MBS zone identifier differs from that at the position B, it is judged that the communication type MBS zone is changed, and the following zone-moving processing is performed.

Fig. 10 illustrates a flowchart of the operation when the mobile station 6 moves across the zones. In Fig. 10, the mobile station 6 is receiving a service of the multicast group G2, and the operation when the mobile station 6 moves from the position B to the position C is shown. First, the mobile station 6 specifies G2 as the multicast group address and sends the multicast participation message 61 when moving to BS5-3 (Step S31). Then, BS5-3 transfers this message to GW4-2 as the multicast participation message 62 at moving (Step S32). The multicast participation messages 61 and 62 at moving includes the information that apparatuses (anchor apparatuses), which have controlled the processing (corresponding to Steps S21, S22, and S23 in Fig. 6) of the previous multicast participation request, are BS5-1 and GW4-1.

Next, GW4-2 sends the zone-moving notification message 63 informing that the mobile station 6 has moved across the MBS zones to GW4-1 which has BS5-1 that performed the multicast participation request of the previous mobile station 6 based on the multicast participation message 62 at moving obtained in Step S32 (Step S33). Next, when GW4-1 receives the zone-moving notification message 63, GW4-1 sends the zone-moving response message 64 to GW4-2 (Step S34). On this occasion, GW4-1 sends also the information (registration information) required for the mobile station 6 to participate in the multicast group G2 such as that the type of MBS of the multicast group G2 is the communication type MBS included in the zone-moving response message 64.

Next, GW4-2 adds the mobile station 6 to the participation station list for the multicast group G2 (Step S35). When the mobile station 6 is a new participating station for the multicast group G2, GW4-2 sends the route change message 53 to the multicast router 3-1 in the upstream side to request the delivery of the multicast group G2. Furthermore, GW4-2 sets up data paths between GW4-2 and BS5-3, and between GW4-2 and BS5-4, which configure the communication type MBS zone 13 (Step S39).

On the other hand, GW4-1 deletes the mobile station 6 from the participation station list for the multicast group G2 (Step S36). Next, GW4-1 confirms whether a participating station for the multicast group G2 exists. In the case of Fig. 10, because the gateway apparatus involved in the communication type MBS zone 12 is only GW4-1 itself, only the participation station list of itself is confirmed; however, if a plurality of gateway apparatuses are involved, all stations in the communication type MBS zone 12 are confirmed using a means such as performing a message exchange with the related gateway apparatuses. If no participating station for the multicast group G2 exists in the communication type MBS zone 12, GW4-1 sends the route change message 53 to the multicast router 3-1 in the upstream side (Step S40) to perform the delete notification of the participation to the multicast group address G2. Furthermore, a data path between GW4-1 and BS5-1, and between GW4-1 and BS5-2, which configures the communication type MBS zone 12 (Step S41). In addition, on this occasion, if a plurality of gateway apparatuses are related to the communication type MBS zone 12, GW4-1 sends a delivery tree change message to the related gateway apparatuses to direct them to perform the delete notification of the participation to the multicast group address G2.

Finally, operation of proxy report processing for a query message sent from the multicast router 3-1 is explained with reference to Fig. 11. In the proxy report processing to the query message, for the inquiry of the participating station, as a proxy for the participating station, GW4-1 responds the answer for whether or not the participating station exists. In this way, by performing the proxy response, GW4-1 can respond to the query message of the multicast router 3-1, thereby enabling to reduce the load of the mobile station and make the effective use of frequency resources.

In the present embodiment, a network based on the IP multicast technique is supposed, and for the multicast route control, messages complying with the PIM protocol, the IGMP, the MLD protocol, and other protocols are used. First, the multicast router 3-1 complying with the IGMP and the MLD protocol sends a query message 54 to search for the multicast participating station (Step S51). On the other hand, as described above, GW4-1 provides a participation station list for each multicast group, and control whether or not the participating mobile station exists. Therefore, GW4-1 that has received the query message 54 refers to the participation station list (Step S52) and sends a report message 55 based on whether or not the participating mobile station exists (Step S53).

In addition, in the present embodiment, two types - communication type MBS and broadcast type MBS are provided as the types of MBS, and the corresponding respective MBS zones are also two types; however, three or more types of the MBS zones can be provided by changing the range of the MBS zone according to the characteristics of the contents. In this situation, although the number of types increases, the operation thereof performed by each type is the same as in the present embodiment.

As described above, in the present embodiment, the MBS contents are separated into the communication type MBS and the broadcast type MBS, and these types of MBS are made to be separately used according to the contents, thereby enabling to provide an appropriate usability and make the effective use of frequency resources. In addition, because a plurality of MBS zone allocations corresponding to the types of MBS are made to be provided, the services with a wide range of MBS zone and a limited range of MBS zone can be furnished at the same time.

In addition, because the gateway apparatus holds the MBS zone configuration information, the gateway apparatuses in a zone can concertedly perform the processing and the load of the MBS control apparatus can be reduced. Moreover, because the gateway apparatus controls the participating list of the multicast group, the necessity of changing the delivery tree can be appropriately judged

Furthermore, when the mobile station 6 participating in the multicast group moves across the MBS zones, the registration information before move is made to transfer between the gateway apparatus 4-1 and 4-2 without routing through the MBS control apparatus 2, thereby enabling to reduce the load of the MBS control apparatus 2 as well as curtail the processing time and continuously provide the service to the mobile station 6.

### INDUSTRIAL APPLICABILITY

As described above, the communication method and the wireless communication system according to the present invention is advantageously used as a wireless communication system that provides the MBS, and particularly suited to the wireless communication system that provides the services with different MBS zone sizes at the same time.

## Claims

1. A communication method in a wireless communication system that has an MBS function and configures an MBS zone that is a range using same connection identification information, the communication method comprising:
a contents classifying step including an MBS control apparatus classifying MBS contents into a plurality of types of MBS based on characteristics of the MBS contents;
an MBS-zone-allocation managing step including the MBS control apparatus managing information in which an MBS identifier corresponding to the MBS zone, a base station configuring the MBS zone, and a gateway apparatus related to the MBS zone are associated with each other for each of the types of MBS;
an MBS-zone-configuration-information sending step including the MBS control apparatus sending MBS zone configuration information including managed information to the gateway apparatus;
an MBS-zone-configuration-information transfer step including the gateway apparatus holding the MBS zone configuration information and transferring the MBS zone configuration information to a base station under the gateway apparatus;
a connection-information sending step including the base station holding the MBS zone identifier for each of the types of MBS based on the MBS zone configuration information, obtaining connection identification information corresponding to the MBS zone identifier for each of the types of MBS, and sending the connection identification information to a terminal connected to the base station; and
a wireless communicating step including a terminal connected to the base station performing a communication with the base station based on a type of MBS of MBS contents to be serviced and received connection identification information.

2. The communication method according to claim 1, wherein the types of MBS include a communication type MBS and a broadcast type MBS.

3. The communication method according to claim 1, wherein the connection identification information is a multicast connection identifier.

4. The communication method according to claim 1, further comprising:
a delivering step including the MBS control apparatus assigning a multicast group to the MBS contents and delivering a correspondence relation between the MBS contents and assigned multicast group to all terminals;
a participation-request processing step including the terminal selecting a multicast group assigned to desired MBS contents based on the correspondence relation and sending a participation request including a designation of selected multicast group to the MBS control apparatus via a specific base station to be connected with the terminal and a gateway apparatus covering the specific base station;
a participation responding step including the MBS control apparatus obtaining a type of MBS corresponding to the multicast group designated in the participation request and sending a participation response including obtained type of MBS and designated multicast group to the specific gateway apparatus;
a participating-station adding step including the specific gateway apparatus adding a terminal that sent the participation request to a participation station list in which a participating station to a multicast group under the gateway apparatus is stored, based on the participation response; and
a channel-change requesting step including the specific gateway apparatus requesting to change a delivery channel corresponding to the designated multicast group to a channel that includes the gateway apparatus.

5. The communication method according to claim 4, further comprising:
an identifier sending step including the base station including the MBS zone identifier in broadcasting information for each of the types of MBS based on the MBS zone configuration information and sending the broadcasting information;
a move determining step including the terminal holding the MBS zone identifier for each of the types of MBS included in received broadcasting information and, when the MBS zone identifier for each of the types of MBS included in the broadcasting information differs from an MBS zone identifier held before receiving the broadcasting information for each of the types of MBS, determining that the terminal moved across MBS zones; and
a move-request sending step including the terminal sending, when it is determined that the terminal moved across the MBS zones, a new participation request for a participating multicast group at that time to the MBS control apparatus via a base station connected after move and a move-destination gateway apparatus covering the base station as a move request including a move-source gateway apparatus, wherein
the move-destination gateway apparatus adds a terminal that sent the move request to the participation station list based on the participation response to the move request, and
the move-source gateway apparatus deletes the terminal that sent the move request from the participation station list based on the participation response to the move request.

6. The communication method according to claim 4 or 5, further comprising:
a query sending step including a multicast router sending a query message for confirming a participation state of a terminal in a multicast group to a specific terminal; and
a proxy responding step including the gateway apparatus responding a report message to the query message by proxy of the terminal based on whether the specific terminal is included in the participation station list of the gateway apparatus.

7. A wireless communication system that has an MBS function and configures an MBS zone that is a range using same connection identification information, wherein
an MBS control apparatus classifies MBS contents into a plurality of types of MBS based on characteristics of the MBS contents,
the MBS control apparatus manages information in which an MBS identifier corresponding to the MBS zone, a base station configuring the MBS zone, and a gateway apparatus related to the MBS zone are associated with each other for each of the types of MBS,
the MBS control apparatus sends MBS zone configuration information including managed information to the gateway apparatus,
the gateway apparatus holds the MBS zone configuration information and transfers the MBS zone configuration information to a base station under the gateway apparatus,
the base station holds the MBS zone identifier for each of the types of MBS based on the MBS zone configuration information, obtains connection identification information corresponding to the MBS zone identifier for each of the types of MBS, and sends the connection identification information to a terminal connected to the base station, and
a terminal connected to the base station performs a communication with the base station based on a type of MBS of MBS contents to be serviced and received connection identification information.

8. The wireless communication system according to claim 7, wherein the types of MBS include a communication type MBS and a broadcast type MBS.

9. The wireless communication system according to claim 7, wherein the connection identification information is a multicast connection identifier.

10. The wireless communication system according to claim 7, wherein
the MBS control apparatus assigns a multicast group to the MBS contents and delivering a correspondence relation between the MBS contents and assigned multicast group to all terminals,
the terminal selects a multicast group assigned to desired MBS contents based on the correspondence relation and sends a participation request including a designation of selected multicast group to the MBS control apparatus via a specific base station to be connected with the terminal and a gateway apparatus covering the specific base station,
the MBS control apparatus obtains a type of MBS corresponding to the multicast group designated in the participation request and sending a participation response including obtained type of MBS and designated multicast group to the specific gateway apparatus,
the specific gateway apparatus adds a terminal that sent the participation request to a participation station list in which a participating station to a multicast group under the gateway apparatus is stored, based on the participation response, and
the specific gateway apparatus requests to change a delivery channel corresponding to the designated multicast group to a channel that includes the gateway apparatus.

11. The wireless communication system according to claim 10, wherein
the base station includes the MBS zone identifier in broadcasting information for each of the types of MBS based on the MBS zone configuration information and sends the broadcasting information,
the terminal holds the MBS zone identifier for each of the types of MBS included in received broadcasting information and, when the MBS zone identifier for each of the types of MBS included in the broadcasting information differs from an MBS zone identifier held before receiving the broadcasting information for each of the types of MBS, determines that the terminal moved across MBS zones,
the terminal sends, when it is determined that the terminal moved across the MBS zones, a new participation request for a participating multicast group at that time to the MBS control apparatus via a base station connected after move and a move-destination gateway apparatus covering the base station as a move request including a move-source gateway apparatus,
the move-destination gateway apparatus adds a terminal that sent the move request to the participation station list based on the participation response to the move request, and
the move-source gateway apparatus deletes the terminal that sent the move request from the participation station list based on the participation response to the move request.

12. The wireless communication system according to claim 10 or 11, wherein,
a multicast router sends a query message for confirming a participation state of a terminal in a multicast group to a specific terminal, and
the gateway apparatus responds a report message to the query message by proxy of the terminal based on whether the specific terminal is included in the participation station list of the gateway apparatus.
